# EUROPEAN PATENT APPLICATION

(11) **EP 4 712 586 A1**
(43) Date of publication of application: **18.03.2026**
(21) Application number: 24806398.4
(22) Date of filing: 07.05.2024
(51) Int. Cl.: H04W 52/02

(54) **AUXILIARY INFORMATION SENDING METHOD AND RECEIVING METHOD, TERMINAL AND NETWORK SIDE DEVICE**

(30) Priority: 12.05.2023 CN 202310536739
(71) Applicant: Vivo Mobile Communication Co., Ltd., Dongguan, Guangdong 523863 (CN)
(72) Inventor: LIU, Xuanbing, Dongguan, Guangdong 523863 (CN)
(74) Representative: Lavoix
(86) International application number: PCT/CN2024/091306
(87) International publication number: WO 2024/235042

(57) **Abstract**

This application discloses an assistance information sending method and receiving method, a terminal, and a network side device, which pertain to the field of communication technologies. The assistance information sending method in embodiments of this application includes: A terminal sends LP-WUS assistance information, where the LP-WUS assistance information is used to assist in at least one of the following: sending an LP-WUS to the terminal; scheduling the terminal; sending a control command to the terminal; and sending data to the terminal, where the LP-WUS assistance information includes at least one of the following: an expected time interval and preference information; where the terminal does not monitor a physical downlink control channel PDCCH or does not receive data sent by a network within the expected time interval; and the preference information includes at least one of the following: sleep mode preference information and LP-WUS indication content preference information.

## Description

### CROSS-REFERENCE TO RELATED APPLICATIONS

This application claims priority to Chinese Patent Application No. 202310536739.3, filed on May 12, 2023, which is incorporated herein by reference in its entirety.

### TECHNICAL FIELD

This application pertains to the field of communication technologies, and specifically relates to an assistance information sending method and receiving method, a terminal, and a network side device.

### BACKGROUND

In some related technologies, a network side device sends a message to a terminal, such as a low power wake-up signal (Low Power Wake-up Signal, LP-WUS), a control command, and data. In a case that the network side device does not know an LP-WUS capability or duration required for waking up of the terminal device, the message sent by the network side device to the terminal may be unfavorable for receiving by the terminal, and consequently, communication performance of the terminal is relatively poor.

### SUMMARY

Embodiments of this application provide an assistance information sending method and receiving method, a terminal, and a network side device, which can resolve a problem of relatively poor communication performance of the terminal.

According to a first aspect, an assistance information sending method is provided, including:
sending, by a terminal, LP-WUS assistance information, where the LP-WUS assistance information is used to assist in at least one of the following:
   sending an LP-WUS to the terminal;
   scheduling the terminal;
   sending a control command to the terminal; and
   sending data to the terminal;
   where the LP-WUS assistance information includes at least one of the following:
      an expected time interval and preference information;
      where the terminal does not monitor a physical downlink control channel PDCCH or does not receive data sent by a network within the expected time interval; and
      the preference information includes at least one of the following: sleep mode preference information and LP-WUS indication content preference information.

According to a second aspect, an assistance information receiving method is provided, including:
receiving, by a network side device, LP-WUS assistance information sent by a terminal, where the LP-WUS assistance information is used to assist in at least one of the following:
sending an LP-WUS to the terminal;
scheduling the terminal;
sending a control command to the terminal; and
sending data to the terminal;
where the LP-WUS assistance information includes at least one of the following:
   an expected time interval and preference information;
   where the terminal does not monitor a physical downlink control channel PDCCH or does not receive data sent by a network within the expected time interval; and
   the preference information includes at least one of the following: sleep mode preference information and LP-WUS indication content preference information.

According to a third aspect, an assistance information sending apparatus is provided, including:
a first sending module, configured to send low power wake-up signal LP-WUS assistance information, where the LP-WUS assistance information is used to assist in at least one of the following:
sending an LP-WUS to a terminal;
scheduling the terminal;
sending a control command to the terminal; and
sending data to the terminal;
where the LP-WUS assistance information includes at least one of the following:
   an expected time interval and preference information;
   where the terminal does not monitor a physical downlink control channel PDCCH or does not receive data sent by a network within the expected time interval; and
   the preference information includes at least one of the following: sleep mode preference information and LP-WUS indication content preference information.

According to a fourth aspect, an assistance information receiving apparatus is provided, including:
a first receiving module, configured to receive low power wake-up signal LP-WUS assistance information sent by a terminal, where the LP-WUS assistance information is used to assist in at least one of the following:
sending an LP-WUS to the terminal;
scheduling the terminal;
sending a control command to the terminal; and
sending data to the terminal;
where the LP-WUS assistance information includes at least one of the following:
   an expected time interval and preference information;
   where the terminal does not monitor a physical downlink control channel PDCCH or does not receive data sent by a network within the expected time interval; and
   the preference information includes at least one of the following: sleep mode preference information and LP-WUS indication content preference information.

According to a fifth aspect, a terminal is provided. The terminal includes a processor and a memory, the memory stores a program or instructions capable of running on the processor, and when executed by the processor, the program or the instructions implement the steps of the assistance information sending method provided in the embodiments of this application.

According to a sixth aspect, a terminal is provided, including a processor and a communication interface, where the communication interface is configured to send LP-WUS assistance information, where the LP-WUS assistance information is used to assist in at least one of the following: sending an LP-WUS to the terminal; scheduling the terminal; sending a control command to the terminal; and sending data to the terminal, where the LP-WUS assistance information includes at least one of the following: an expected time interval and preference information; where the terminal does not monitor a physical downlink control channel PDCCH or does not receive data sent by a network within the expected time interval; and the preference information includes at least one of the following: sleep mode preference information and LP-WUS indication content preference information.

According to a seventh aspect, a network side device is provided, where the network side device includes a processor and a memory, the memory stores a program or instructions capable of running on the processor, and when executed by the processor, the program or the instructions implement the steps of the assistance information receiving method provided in the embodiments of this application.

According to an eighth aspect, a network side device is provided, including a processor and a communication interface, where the communication interface is configured to receive LP-WUS assistance information sent by a terminal, where the LP-WUS assistance information is used to assist in at least one of the following: sending an LP-WUS to the terminal; scheduling the terminal; sending a control command to the terminal; and sending data to the terminal, where the LP-WUS assistance information includes at least one of the following: an expected time interval and preference information; where the terminal does not monitor a physical downlink control channel PDCCH or does not receive data sent by a network within the expected time interval; and the preference information includes at least one of the following: sleep mode preference information and LP-WUS indication content preference information.

According to a ninth aspect, a readable storage medium is provided. The readable storage medium stores a program or instructions, and the program or the instructions are executed by a processor to implement the steps of the assistance information sending method provided in the embodiments of this application, or implement the steps of the assistance information receiving method provided in the embodiments of this application.

According to a tenth aspect, a wireless communication system is provided, including a terminal and a network side device, where the terminal may be configured to perform the steps of the assistance information sending method provided in the embodiments of this application, and the network side device may be configured to perform the steps of the assistance information receiving method provided in the embodiments of this application.

According to an eleventh aspect, a chip is provided. The chip includes a processor and a communication interface. The communication interface is coupled to the processor. The processor is configured to run a program or instructions to implement the assistance information sending method provided in the embodiments of this application, or implement the assistance information receiving method provided in the embodiments of this application.

According to a twelfth aspect, a computer program/program product is provided. The computer program/program product is stored in a storage medium. The computer program/program product is executed by at least one processor to implement the steps of the assistance information sending method provided in the embodiments of this application, or the program/program product is executed by at least one processor to implement the steps of the assistance information receiving method provided in the embodiments of this application.

In the embodiments of this application, a terminal sends LP-WUS assistance information, where the LP-WUS assistance information is used to assist in at least one of the following: sending an LP-WUS to the terminal; scheduling the terminal; sending a control command to the terminal; and sending data to the terminal, where the LP-WUS assistance information includes at least one of the following: an expected time interval or preference information; where the terminal does not monitor a physical downlink control channel PDCCH or does not receive data sent by a network within the expected time interval; and the preference information includes at least one of the following: sleep mode preference information and LP-WUS indication content preference information. In this way, the expected time interval or the preference information included in the LP-WUS assistance information provided by the terminal provides assistance for at least one of sending an LP-WUS to the terminal, scheduling the terminal, sending a control command to the terminal, and sending data to the terminal, so that a message sent to the terminal is more conducive to receiving by the terminal, and communication performance of the terminal is further improved.

### BRIEF DESCRIPTION OF DRAWINGS

FIG. 1 is a block diagram of a wireless communication system to which an embodiment of this application is applicable;
FIG. 2 is a schematic structural diagram of a terminal according to an embodiment of this application;
FIG. 3 is a schematic diagram of a signal according to an embodiment of this application;
FIG. 4 is a schematic diagram of an LP-WUS according to an embodiment of this application;
FIG. 5 is a flowchart of an assistance information sending method according to an embodiment of this application;
FIG. 6 is a flowchart of an assistance information receiving method according to an embodiment of this application;
FIG. 7 is a structural diagram of an assistance information sending apparatus according to an embodiment of this application;
FIG. 8 is a structural diagram of an assistance information receiving apparatus according to an embodiment of this application;
FIG. 9 is a structural diagram of a communication device according to an embodiment of this application;
FIG. 10 is a structural diagram of a terminal according to an embodiment of this application; and
FIG. 11 is a structural diagram of a network side device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed or the requested result.

It should be noted that a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6^{th} generation (6^{th} Generation, 6G) communication system other than the NR system.

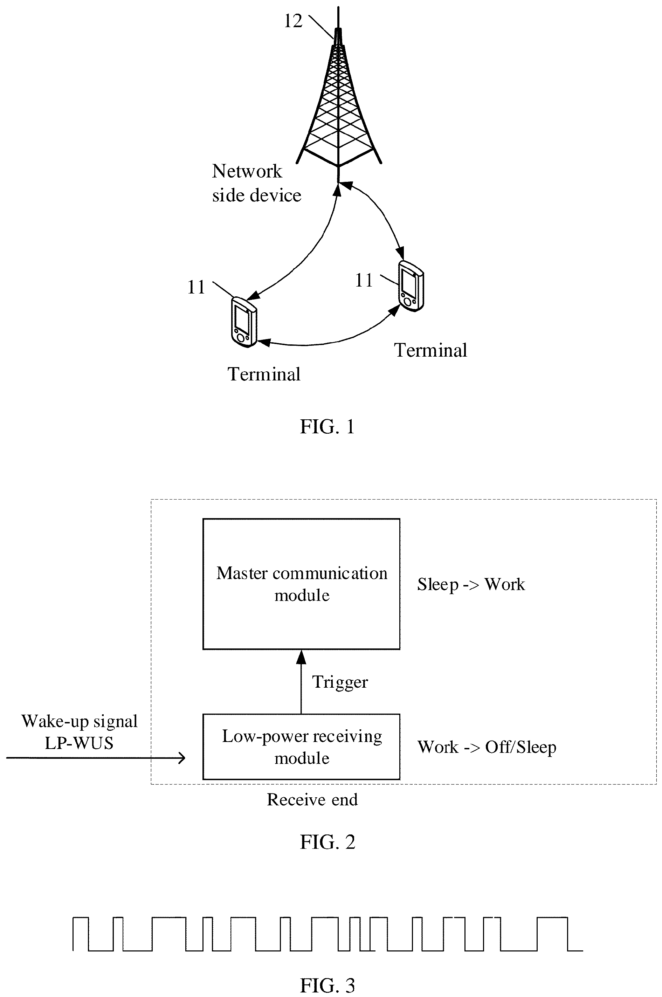

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal-side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, and the like. The base station may be referred to as a NodeB (NodeB, NB), an evolved NodeB (Evolved NodeB, eNB), the next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another proper term in the field. The base station is not limited to a specific technical term, provided that the same technical effect is achieved. It should be noted that in the embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, only a core network device in the NR system is used as an example for description, and a specific type of the core network device is not limited.

In the embodiments of this application, a low power receiver may also be referred to as a low power wake up radio (low power wake up radio, LP-WUR) or an almost zero power wake up radio (almost zero power wake up radio, AZP-WUR). A terminal receive end includes a first module and a second module, specifically as shown in FIG. 2. The first module is a master communication module and is configured to send/receive mobile communication data, and the second module is a low-power receiving module (also referred to as a low-power wake-up receiving module) and is configured to receive an LP-WUS. In an energy-saving state, a terminal enables the low-power receiving module to monitor the LP-WUS, and disables the master communication module or enables the master communication module to enter a sleep state. When downlink data arrives, a network sends an LP-WUS to the terminal. After monitoring the wake up signal by using the low-power receiving module, the terminal triggers the master communication module after a series of determining, to change from a disabled state to an enabled state or a wakeup state. In this case, the low power receiving module enters the disabled state from a working state. The low-power wake-up receiving module may be continuously enabled or intermittently enabled, and may receive a low power wake-up signal when being enabled.

In the embodiments of this application, to reduce a receiving activity of a terminal in a standby state, so that a radio frequency (Radio Frequency, RF) module and a baseband (MODEM) module are truly disabled, and communication receiving power consumption is greatly reduced, an almost "zero" power radio may be introduced into a receiving module of the terminal. The almost "zero" power radio does not require complex signal detection (such as amplification, filtering, and quantization) by the RF module and signal processing by the baseband, and can only depend on passive matched filtering and low power signal processing.

On a network side, a wake up signal is triggered on-demand (on-demand), so that the almost "zero" power radio can be activated to learn of an activation advertisement, thereby triggering a series of procedures inside the terminal, for example, enabling a radio frequency transceiver module and a baseband processing module.

Generally, the wake up signal is a relatively simple on-off keying (on-off keying) signal. A time-domain pattern of the on-off keying signal is shown in FIG. 3. In this way, the radio can learn of a wake up advertisement by using a process such as simple energy detection and subsequent possible sequence detection and identification. In addition, while the terminal enables a low power-wake up receiver to receive the wake up signal, the master communication module may enter the sleep state or the disabled state to maintain a relatively low power level, thereby implementing power saving by receiving the wake up signal.

Receiving of the low power wake-up signal may be applied to a terminal in an RRC idle (RRC_idle) or RRC inactive (inactive) state, or may be applied to a terminal in an RRC connected (RRC_connected) state, thereby implementing energy saving of the terminal.

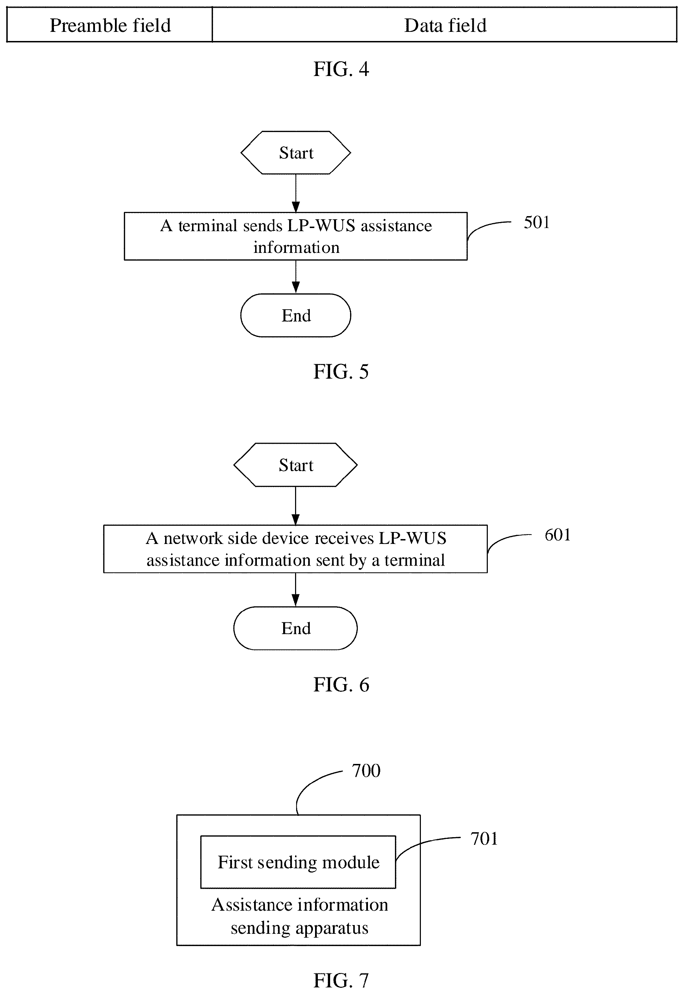

In some embodiments, a basic framework of the LP-WUS is shown in FIG. 4, including a preamble field (Preamble field) and a data field (Data field).

The preamble field may be used to include but is not limited to detection, synchronization, data rate (data rate) determining, and other carried information of the LP-WUS.

The data field is used to bear a data part.

With reference to the accompanying drawings, the following describes in detail, by using some embodiments and application scenarios, an assistance information sending method and receiving method, a terminal, and a network side device that are provided in the embodiments of this application.

Referring to FIG. 5, FIG. 5 is a flowchart of an assistance information sending method according to an embodiment of this application. As shown in FIG. 5, the method includes the following steps.

Step 501: A terminal sends LP-WUS assistance information, where the LP-WUS assistance information is used to assist in at least one of the following:
sending an LP-WUS to the terminal;
scheduling the terminal;
sending a control command to the terminal; and
sending data to the terminal.

Step 501 is that the terminal sends the LP-WUS assistance information to a network side device.

That the LP-WUS assistance information is used to assist in at least one of the foregoing may be understood as at least one of the following:

The LP-WUS assistance information is used to assist the network side device in sending the LP-WUS to the terminal;
the LP-WUS assistance information is used to assist the network side device in scheduling the terminal;
the LP-WUS assistance information is used to assist the network side device in sending a control command to the terminal; and
the LP-WUS assistance information is used to assist the network side device in sending data to the terminal.

For example, when executing at least one of the foregoing, the network side device performs execution based on the LP-WUS assistance information, for example, determines a sending opportunity of the LP-WUS based on the LP-WUS assistance information, determines a sending opportunity of the control command based on the LP-WUS assistance information, and schedules the terminal based on the LP-WUS assistance information, and determines a sending opportunity of the data based on the LP-WUS assistance information.

The LP-WUS assistance information includes at least one of the following:
an expected time interval and preference information;
where the terminal does not monitor a physical downlink control channel (Physical downlink control channel, PDCCH) or does not receive data sent by a network within the expected time interval; and
the preference information includes at least one of the following: sleep mode preference information and LP-WUS indication content preference information.

That the LP-WUS assistance information includes at least one of the foregoing may also be understood as that the LP-WUS assistance information indicates at least one of the foregoing, and may explicitly or implicitly indicate the expected time interval and the preference information, so as to assist the at least one of the foregoing.

That the terminal does not monitor a PDCCH or does not receive data sent by a network within the expected time interval may be that the terminal cannot monitor a physical downlink control channel (Physical downlink control channel, PDCCH) or cannot receive data sent by a network within the expected time interval.

In some implementations, the expected time interval may be a minimum time interval. The minimum time interval indicates that a time interval between the LP-WUS and the network sending data or the PDCCH is not less than the time interval, for example, the minimum time interval at which the terminal does not monitor the PDCCH or does not receive the data sent by the network.

In addition, the expected time interval may also be referred to as a preferred or recommended time interval, or may also be referred to as preparation time, for example, preparation time from the terminal receiving the LP-WUS to monitoring the PDCCH, or preparation time from the terminal receiving the LP-WUS to receiving the data, or a time length required for the terminal to be prepared to monitor the PDCCH or receive the data after being woken up by the LP-WUS.

In this implementation, a network side may be assisted in by using the expected time interval to ensure that an interval between the LP-WUS and control signaling (such as a PDCCH) that are sent by the network side to the terminal is not less than the expected time interval, so as to prevent the terminal from missing receiving of the control signaling. Alternatively, a network side may be assisted in by using the expected time interval to ensure that an interval between the LP-WUS and data that are sent by the network side to the terminal is not less than the expected time interval, so as to prevent the terminal from missing receiving of the data. The terminal may be scheduled with assistance by using the expected time interval, so that an interval between the LP-WUS and control signaling or data that are sent by the terminal is not less than the expected time interval, so as to prevent the terminal from missing receiving of the control signaling or the data.

In some implementations, the expected time interval may also be wake-up duration of the terminal. In this way, it can be implemented that the terminal and the network side device understand the wake-up duration of the terminal consistently, so as to avoid missing data receiving by the terminal during a wake-up period from sleep.

The sleep mode preference information may be a sleep mode preferred by the terminal, such as micro sleep (Micro sleep), slight sleep (slight Sleep), deep sleep (Deep Sleep), or ultra-deep sleep (Ultra-deep sleep).

By using the sleep mode preference information, the network side device may send the LP-WUS to the terminal, schedule the terminal, send the control command to the terminal, or send the data to the terminal based on the sleep mode preferred by the terminal. This helps the terminal to save power, and makes the terminal and the network side device consistently understand the sleep mode preferred by the terminal. In this way, the network side device communicates with the terminal according to these sleep modes, so as to prevent the terminal from missing control signaling or data, thereby improving communication performance of the terminal.

In some implementations, the sleep mode preferred by the terminal may implicitly indicate the expected time interval. For example, each sleep mode has an associated expected time interval, which may reduce signaling overheads. Similarly, the sleep mode preferred by the terminal may also be implicitly indicated by using the expected time interval. The expected time interval associated with the sleep mode may be defined by a protocol, or may be preconfigured by a network side.

The LP-WUS indication content preference information may be content indicated by an LP-WUS preferred by the terminal. In this way, the LP-WUS sent to the terminal may be more suitable for the terminal by using the preference information, thereby improving communication performance of the terminal.

In this embodiment of this application, the expected time interval or the preference information included in the LP-WUS assistance information provided by the terminal provides assistance for at least one of sending an LP-WUS to the terminal, scheduling the terminal, sending a control command to the terminal, and sending data to the terminal, so that a message sent to the terminal is more conducive to receiving by the terminal, and communication performance of the terminal is further improved.

Optionally, the expected time interval includes at least one of the following:
time required from receiving the LP-WUS to the terminal being able to perform data receiving;
time required from receiving the LP-WUS to the terminal being able to perform PDCCH monitoring;
time in which the PDCCH is not monitored before discontinuous reception on (Discontinuous Reception ON, DRX ON);
time required from receiving the LP-WUS to monitoring the PDCCH in a discontinuous reception (Discontinuous Reception, DRX) cycle; and
a time interval between the LP-WUS and a PDCCH monitoring occasion.

In some implementations, the time required from receiving the LP-WUS to the terminal being able to perform data receiving may be minimum time required from receiving the LP-WUS to the terminal being able to perform data receiving, and the time required from receiving the LP-WUS to the terminal being able to perform PDCCH monitoring may be minimum time required from receiving the LP-WUS to the terminal being able to monitor the physical downlink control channel PDCCH.

In some implementations, the time required from receiving the LP-WUS to the terminal being able to perform data receiving or the time required from receiving the LP-WUS to the terminal being able to perform PDCCH monitoring may be time delayed from the time of receiving the LP-WUS, and after the time delayed, the terminal can receive data or perform PDCCH monitoring.

In some implementations, the expected time interval may also be referred to as a minimum time interval, preparation time (preparation time), or wake-up duration (wake up time) or wake up latency (Wakeup latency). In this time interval, the terminal is not required to monitor the PDCCH.

In some implementations, the expected time interval may be a time period before time at which the PDCCH is monitored or data is received. For example, the terminal may determine a sleep mode according to a quality of service requirement. Therefore, the terminal correspondingly reports preference of a minimum time interval or preparation time.

Specifically, the expected time interval may be determined in two manners: One is duration calculated after the time at which the LP-WUS is received, and the other is duration calculated before the time at which the PDCCH is monitored or data is received.

In addition, by using the expected time interval, the terminal reports, before a slot of a DRX-on duration timer (DRX-on Duration Timer) starts, a corresponding minimum time interval for activating a downlink bandwidth part (Downlink Bandwidth Part, DL BWP), for example, X slots. In this way, the terminal does not need to monitor the PDCCH, so as to reduce power consumption of the terminal. X corresponds to a minimum time interval value of a subcarrier spacing (Subcarrier Spacing, SCS) for activating the DL BWP.

The time at which the PDCCH is not monitored before DRX ON may be that the terminal is not required to monitor the PDCCH within an expected time interval before DRX on duration (DRX on duration). For example, the terminal is not required to monitor the PDCCH within an expected time interval before first time, where the first time is DRX ON time, that is, the terminal enables a DRX-on duration timer (DRX-on Duration Timer) at the first time.

The time required from receiving the LP-WUS to monitoring the PDCCH in the DRX cycle may be time required from receiving the LP-WUS to starting to monitor the PDCCH in the DRX cycle, for example, minimum time required from receiving the LP-WUS to starting to monitor the PDCCH by the terminal in associated DRX.

The time interval between the LP-WUS and the PDCCH monitoring occasion may be minimum time required from receiving the LP-WUS to the terminal starting a corresponding PDCCH monitoring occasion, where the PDCCH monitoring occasion is the first PDCCH occasion that can be monitored by the terminal, or a PDCCH occasion corresponding to the LP-WUS.

In this implementation, the expected time interval may better assist in sending the LP-WUS to the terminal, scheduling the terminal, sending the control command to the terminal, or sending the data to the terminal, so as to prevent the terminal from missing the control signaling or the data, thereby improving communication performance of the terminal.

Optionally, the LP-WUS indication content preference information is used to indicate that the terminal prefers at least one of the following:
the LP-WUS is used to indicate whether to monitor DRX ON;
the LP-WUS is used to indicate whether to monitor the PDCCH in a DRX cycle; and
the LP-WUS is used to indicate whether to perform PDCCH monitoring.

That the LP-WUS is used to indicate whether to monitor DRX ON may be that the LP-WUS indicates the terminal whether to monitor next DRX ON. The next DRX ON is DRX on duration or a PDCCH monitoring occasion associated with the LP-WUS.

That the LP-WUS is used to indicate whether to monitor the PDCCH in a DRX cycle may be that the LP-WUS indicates whether the terminal monitors the PDCCH during a DRX period or an active period.

That the LP-WUS is used to indicate whether to perform PDCCH monitoring may be that the LP-WUS indicates that the terminal monitors the PDCCH when DRX is not configured.

In this implementation, the LP-WUS indication content preference information may help implement that the terminal and the network side device understand the LP-WUS indication content consistently, so that the LP-WUS sent to the terminal is more suitable for the terminal, so as to improve communication performance of the terminal.

Optionally, the LP-WUS assistance information further indicates at least one of the following:
a downlink BWP associated with the expected time interval, whether continuous LP-WUS monitoring is supported, a cycle mode of monitoring the LP-WUS, whether LP-WUS monitoring in a cell group is supported, a cell group that supports LP-WUS monitoring, a cell group associated with the LP-WUS, or activation or deactivation of the LP-WUS.

The cycle mode of monitoring the LP-WUS may be a time division multiplexing (Time division multiplexing, TDM) pattern of monitoring the LP-WUS, that is, a TDM pattern, for example, a discontinuous reception DRX cycle used to monitor the LP-WUS, a time offset, and duration.

The cell group that supports LP-WUS monitoring may be a master cell group (Master Cell Group, MCG) or a secondary cell group (Secondary Cell Group, SCG).

The cell group associated with the LP-WUS may be a cell group in which the terminal expects to monitor the LP-WUS, for example, a low power receiver of the terminal monitors an LP-WUS corresponding to a cell group at the same time, so that the terminal can report, to the network side, the cell group in which the terminal expects to monitor the LP-WUS.

The activation or deactivation of the LP-WUS may be: When a signal condition of the LP-WUS is poor, the terminal requests the network to deactivate (deactivate) the LP-WUS; and when the signal condition of the LP-WUS is good, the terminal requests the network to activate (activate) the LP-WUS, thereby ensuring flexibility and reliability of using the LP-WUS.

By using the foregoing at least one piece of assistance information, the terminal and the network side can understand the preference of the terminal consistently, which helps improve communication performance between the terminal and the network side device.

In some implementations, the LP-WUS assistance information may further include terminal preference information. For example, when LP-WUS monitoring is not performed or LP-WUS detection is missed (miss LP-WUS detection), the master communication module does not wake up or LP-WUS monitoring continues. In this way, in a case that the LP-WUS is not detected, power consumption caused by repeatedly waking up the master communication module can be avoided.

In some implementations, the LP-WUS assistance information may further include preference for repeatedly sending the LP-WUS. For example, in a case that the terminal does not respond to the PDCCH, the terminal expects the network to send the LP-WUS for a plurality of times, so as to improve receiving performance of the LP-WUS.

In an optional implementation, the LP-WUS is used for at least one of the following:
enabling or waking up a terminal master communication module;
indicating whether to monitor DRX ON;
indicating whether to monitor the PDCCH in a DRX cycle; and
indicating whether to perform PDCCH monitoring.

The enabling or waking up a terminal master communication module may be: The LP-WUS signal is used to indicate to wake up the terminal or the terminal master communication module in an RRC connected state (RRC_CONNECTED).

Enabling or waking up the terminal master communication module may help the terminal save power.

In some implementations, the LP-WUS may indicate to perform LP-WUS monitoring at the time of starting DRX on duration, or perform LP-WUS monitoring by the UE during DRX off. In this way, the terminal monitors DRX ON according to the indication by the LP-WUS during DRX off, or monitors the PDCCH according to the indication by the LP-WUS during the DRX on duration or active time (Active time).

Optionally, the indicating whether to monitor DRX ON includes at least one of the following:
indicating whether to monitor next DRX ON; and
indicating whether to monitor DRX ON associated with the LP-WUS.

DRX ON associated with the LP-WUS may be configured by the network side or specified in a protocol.

The indicating whether to monitor DRX ON associated with the LP-WUS may be indicating the terminal whether to monitor DRX on duration associated with the LP-WUS. For example, the LP-WUS indicates whether to monitor the PDCCH, where a PDCCH monitoring occasion is associated with a same DRX long period or DRX short period as the LP-WUS.

By indicating whether to monitor DRX ON, more flexible DRX ON monitoring can be supported, so as to help the terminal save power.

The indicating whether to monitor the PDCCH in a DRX cycle may be indicating whether to monitor the LP-WUS within DRX or during an active period to trigger PDCCH monitoring (PDCCH monitoring).

By indicating whether to monitor the PDCCH in a DRX cycle, more flexible DRX ON monitoring can be supported, so as to help the terminal save power.

Optionally, the indicating whether to monitor the PDCCH in a DRX cycle includes at least one of the following:
indicating whether to monitor a PDCCH monitoring occasion associated with the LP-WUS;
indicating whether to monitor the PDCCH during an active period of the DRX cycle;
indicating to start PDCCH monitoring in a DRX cycle associated with the LP-WUS;
indicating to end PDCCH monitoring in the DRX cycle associated with the LP-WUS; and
indicating to stop a DRX inactivity timer (drx-InactivityTimer) running in the DRX cycle associated with the LP-WUS.

The PDCCH monitoring occasion associated with the LP-WUS may be configured by the network side or specified in a protocol. For example, the network side configures or the protocol specifies that the LP-WUS is associated with the PDCCH monitoring occasion, for example, the LP-WUS and the PDCCH monitoring occasion are associated with a same DRX long period or DRX short period. In this way, only the PDCCH monitoring occasion can be monitored, so as to help the terminal save power.

The indicating to start PDCCH monitoring in a DRX cycle associated with the LP-WUS may be indicating to start PDCCH monitoring within the associated DRX, that is, to start continuous PDCCH monitoring within the DRX. In this way, an occasion at which the UE starts PDCCH monitoring in a DRX period can be flexibly controlled. The master communication module does not need to wake up at a DRX On Duration moment, which helps the UE wake up, based on the LP-WUS, the master communication module and save power. In addition, time for starting PDCCH monitoring in the DRX cycle associated with the LP-WUS can be flexibly configured.

The indicating to end PDCCH monitoring in the DRX cycle associated with the LP-WUS may be stopping PDCCH monitoring within the associated DRX, that is, stopping monitoring of the PDCCH within the DRX. In this way, the UE can be flexibly controlled to stop PDCCH monitoring within the DRX period, thereby saving power. In addition, time for ending PDCCH monitoring in the DRX cycle associated with the LP-WUS can be flexibly configured.

The indicating to stop a DRX inactivity timer running in the DRX cycle associated with the LP-WUS helps the terminal enter a power saving state in advance.

The indicating whether to perform PDCCH monitoring may be whether the terminal performs PDCCH monitoring when the DRX mode is not configured. In this way, the terminal can be supported to flexibly perform PDCCH monitoring to achieve a power saving effect.

In some implementations, the indicating whether to perform PDCCH monitoring may be indicating whether to perform continuous LP-WUS monitoring or discontinuous LP-WUS monitoring.

Optionally, the indicating whether to perform PDCCH monitoring includes at least one of the following:
indicating whether to monitor a PDCCH monitoring occasion associated with the LP-WUS;
indicating to start PDCCH monitoring; and
indicating to end PDCCH monitoring.

The PDCCH monitoring occasion associated with the LP-WUS may be specified in a protocol or configured by the network side. In some implementations, the PDCCH monitoring occasion associated with the LP-WUS may be a next PDCCH monitoring occasion of the LP-WUS.

The indicating to start PDCCH monitoring may be that the network side indicates the terminal to start continuous PDCCH monitoring, so that an occasion at which the terminal starts PDCCH monitoring can be flexibly controlled. The master communication module wakes up only when the PDCCH needs to be monitored, which helps the terminal further save power.

The stopping PDCCH monitoring may flexibly control the terminal to stop monitoring the PDCCH, which helps the terminal efficiently enter a power saving state.

Optionally, the LP-WUS is further used for at least one of the following:
indicating cell information for wake-up or monitoring;
indicating search space set information for performing PDCCH monitoring; and
indicating whether to perform search space set group (Search space set group, SSSG) switching.

The indicating cell information for wake-up or monitoring may be indicating a cell or a cell group for wake-up or monitoring.

In some implementations, the indicating cell information for wake-up or monitoring may include at least one of the following:
indicating a cell or a cell group associated with the LP-WUS;
a cell indicating whether to perform monitoring;
a cell group indicating wake-up or monitoring; and
indicating whether to wake up or monitor an SCG.

The cell group associated with the LP-WUS may be an MCG or an SCG associated with the LP-WUS.

The cell indicating whether to perform monitoring may be a primary cell (Primary cell, PCell), a primary secondary cell (Primary Secondary Cell, PSCell), a secondary cell, carrier aggregation, a serving cell, or the like.

The cell group indicating wake-up or monitoring may be an MCG, a secondary cell group, or the like, for example, indicates that the MCG or the SCG has data.

In some implementations, to save power, the terminal may disable the SCG or an SCG connection in a case of having data transmission to enter the sleep state, and then wake up the SCG or monitor the PDCCH on the SCG according to the LP-WUS.

The search space set information that indicates to perform PDCCH monitoring may be indicating a search space set group index, for example, the search space set group index indicates 0 or 1. In this way, by using the search space set information that indicates to perform PDCCH monitoring, the terminal performs PDCCH monitoring on a corresponding search space set, so as to improve monitoring performance of the terminal.

By using the indicating whether to perform SSSG switching, the terminal may be supported to flexibly switch the SSSG, so as to improve monitoring performance of the terminal.

In an optional implementation, before the terminal sends the LP-WUS assistance information, the method further includes:

The terminal receives LP-WUS assistance configuration information.

The LP-WUS assistance configuration information may be LP-WUS assistance configuration information sent by the network side device to the terminal.

The LP-WUS assistance configuration information is used to configure the LP-WUS assistance information, so that the LP-WUS assistance information sent by the terminal is proper and effective.

In some implementations, the LP-WUS assistance configuration information may be specified in a protocol or preconfigured, or the terminal does not obtain the LP-WUS assistance configuration information, and the LP-WUS assistance configuration information sent by the terminal may be sent not based on the LP-WUS assistance configuration information.

Optionally, the LP-WUS assistance configuration information is used to indicate at least one of the following:
whether the LP-WUS assistance information is allowed to be reported;
a network side supports the LP-WUS;
the network side supports the LP-WUS assistance information;
information content indicated by the LP-WUS;
a configuration time interval, where the configuration time interval is used to configure that the terminal does not monitor the PDCCH or does not receive data sent by the network within the configuration time interval;
the expected time interval allowed to be reported;
a prohibit timer (Prohibit timer), where when the prohibit timer runs, the terminal is prohibited from sending the LP-WUS assistance information;
a cell in which the terminal performs LP-WUS monitoring;
a cell group in which the terminal performs LP-WUS monitoring;
a cycle mode of the LP-WUS supported by the network side;
a parameter range of the LP-WUS supported by the network side;
whether to carry, by using the LP-WUS, search space set information used for PDCCH monitoring; and
configuration information of the LP-WUS.

The content information indicated by the LP-WUS may include at least one of the following:
a PDCCH monitoring occasion (PDCCH monitoring occasion) associated with the LP-WUS;
indicating the terminal whether to monitor next DRX ON;
a DRX cycle associated with the LP-WUS, such as a long cycle or a short DRX cycle;
monitoring the PDCCH during DRX on duration or during active duration (Active Duration); and
continuously monitoring the LP-WUS, or discontinuously monitoring the LP-WUS, for example, including continuously or discontinuously monitoring the LP-WUS when DRX is not configured.

The configuration time interval may be a time interval determined by the network side device. The time interval may be minimum time during which the PDCCH is not required to be monitored after the LP-WUS is received, or the PDCCH is not required to be monitored by the terminal within the configuration time interval, and the configuration time interval may be a time period before time at which the PDCCH is monitored.

In some implementations, the LP-WUS assistance configuration information indicates the configuration time interval, and the terminal does not report the expected time interval in the LP-WUS assistance information, so that the terminal directly works according to the configuration time interval.

In some implementations, the LP-WUS assistance configuration information indicates the configuration time interval, and the terminal reports the expected time interval in the LP-WUS assistance information. The expected time interval may be understood as a time interval recommended by the terminal. The network side device may finally determine to decide the configuration time interval or the expected time interval, and then deliver the final time interval to the terminal.

In some implementations, the LP-WUS assistance configuration information does not indicate the configuration time interval, and the terminal reports the expected time interval in the LP-WUS assistance information, so that the terminal works according to the expected time interval.

The expected time interval allowed to be reported may be a plurality of expected time intervals allowed for reporting, for example, a range of the expected time interval allowed for reporting is: {5 ms, 10 ms, 20 ms}.

The allowed sleep mode may be: micro sleep (Micro sleep), slight sleep (slight Sleep), deep sleep (Deep Sleep), ultra-deep sleep (Ultra-deep sleep), or the like. The sleep mode implicitly indicates the expected time interval.

The prohibit timer may represent a time interval at which the terminal sends the LP-WUS assistance information, for example, 2 seconds or 10 seconds.

The cell group in which the terminal performs LP-WUS monitoring may be at least one cell group, such as an MCG or an SCG.

A parameter range of the LP-WUS supported by the network side may be an LP-WUS period parameter range supported by the network side, for example, 1.28 seconds, 2.56 seconds, and 5.12 seconds.

The whether to carry, by using the LP-WUS, search space set information used for PDCCH monitoring may implicitly indicate whether to perform SSSG switching by using the LP-WUS.

The configuration information of the LP-WUS may be configuration information provided for the terminal to detect the LP-WUS, for example, may include at least one of the following:
an LP-WUS identifier (LP-WUS ID), that is, an LP-WUS identifier that needs to be monitored by the terminal;
a number of search space sets (a number of search space sets) configured to monitor the PDCCH on an active DL BWP of a PCell or an SpCell;
a payload size for an LP-WUS (a payload size for LP-WUS signal);
location information of a wake-up indication bit, where the wake-up indication bit is information carried in the LP-WUS, and is used to indicate to enable or not to enable a DRX-on duration timer of a next DRX long period or short period;
active DL BWPs (active DL BWPs), used to monitor the PDCCH; and
a time offset, that is, an offset of time at which the terminal starts to monitor the LP-WUS relative to a PDCCH monitoring occasion indicated by the LP-WUS. For example, when the terminal is configured with a DRX operation mode, the time offset is a time value before a slot of the DRX-on duration timer is started on the PCell or the SpCell.

In the foregoing implementation, the LP-WUS assistance configuration information indicates at least one of the foregoing, so that the terminal can report more proper LP-WUS assistance information. Therefore, the terminal and the network side device can more easily understand the LP-WUS assistance information consistently, so that the LP-WUS assistance information can better achieve an assistance effect.

Optionally, the LP-WUS assistance configuration information is carried in at least one of the following:
a system message and a radio resource control RRC reconfiguration message.

In this implementation, because the LP-WUS assistance configuration information is carried by using a system message or an RRC reconfiguration message, no additional message needs to be introduced, so as to reduce transmission overheads.

Optionally, the LP-WUS assistance information is carried in at least one of the following:
UE assistance information (UE Assistance Information) and an RRC reconfiguration complete message (RRC Reconfiguration Complete message).

In this implementation, the LP-WUS assistance information may be sent by using UE assistance information or an RRC reconfiguration complete message.

The RRC reconfiguration complete message is used, so that the terminal negotiates the LP-WUS assistance information with the network after the LP-WUS is configured by the network, so as to enable the LP-WUS and avoid LP-WUS configuration that is not conducive to power saving of the terminal.

However, the UE assistance information is sent, so that the terminal can flexibly change the LP-WUS assistance information according to a service that is performed or a battery level.

In addition, the terminal carries the LP-WUS assistance information by using the RRC reconfiguration complete message. After the LP-WUS configuration is negotiated with the network, the terminal needs to change the LP-WUS assistance information by using the UE assistance information again.

In an optional implementation, before the terminal sends the LP-WUS assistance information, the method further includes:

The terminal sends capability information of the LP-WUS of the terminal.

The capability information of the LP-WUS may be an LP-WUS capability of the terminal, and the LP-WUS capability is that the terminal supports or can receive the LP-WUS, and can respond to the LP-WUS, that is, respond to content indicated by the LP-WUS.

In this implementation, it may be implemented that only in a case that the terminal has the LP-WUS capability, the network sends the LP-WUS assistance configuration information to the terminal, so as to reduce transmission overheads.

In some implementations, the network side device may determine, according to the LP-WUS assistance information, to enable or disable an LP-WUS function in the RRC connected state. For example, the network side device reconfigures that if a delay is much longer than that required in a service, the LP-WUS is disabled in the RRC connected state.

In this embodiment of this application, the terminal sends LP-WUS assistance information, where the LP-WUS assistance information is used to assist in at least one of the following: sending an LP-WUS to the terminal; scheduling the terminal; sending a control command to the terminal; and sending data to the terminal. In this way, the LP-WUS assistance information provided by the terminal provides assistance for at least one of sending an LP-WUS to the terminal, scheduling the terminal, sending a control command to the terminal, and sending data to the terminal, so that a message sent to the terminal is more conducive to receiving by the terminal, and communication performance of the terminal is further improved.

Referring to FIG. 6, FIG. 6 is a flowchart of an assistance information receiving method according to an embodiment of this application. As shown in FIG. 6, the method includes the following steps.

Step 601: A network side device receives LP-WUS assistance information sent by a terminal, where the LP-WUS assistance information is used to assist in at least one of the following:
sending an LP-WUS to the terminal;
scheduling the terminal;
sending a control command to the terminal; and
sending data to the terminal;
where the LP-WUS assistance information includes at least one of the following:
   an expected time interval and preference information;
   where the terminal does not monitor a physical downlink control channel PDCCH or does not receive data sent by a network within the expected time interval; and
   the preference information includes at least one of the following: sleep mode preference information and LP-WUS indication content preference information.

Optionally, the method further includes:
The network side device performs at least one of the following based on the LP-WUS assistance information:
sending an LP-WUS to the terminal;
scheduling the terminal;
sending a control command to the terminal; and
sending data to the terminal.

Optionally, the expected time interval includes at least one of the following:
time required from the terminal receiving the LP-WUS to the terminal being able to perform data receiving;
time required from the terminal receiving the LP-WUS to the terminal being able to perform PDCCH monitoring;
time in which the PDCCH is not monitored before discontinuous reception on DRX ON;
time required from the LP-WUS to monitoring the PDCCH in a discontinuous reception DRX cycle; and
a time interval between the LP-WUS and a PDCCH monitoring occasion.

Optionally, the LP-WUS indication content preference information is used to indicate preferring at least one of the following:
the LP-WUS is used to indicate whether to monitor DRX ON;
the LP-WUS is used to indicate whether to monitor the PDCCH in a DRX cycle; and
the LP-WUS is used to indicate whether to perform PDCCH monitoring.

Optionally, the LP-WUS assistance information further indicates at least one of the following:
a downlink bandwidth part BWP associated with the expected time interval, a downlink BWP associated with the first preparation time, whether continuous LP-WUS monitoring is supported, a cycle mode of monitoring the LP-WUS, whether LP-WUS monitoring in a cell group is supported, a cell group that supports LP-WUS monitoring, a cell group associated with the LP-WUS, or activation or deactivation of the LP-WUS.

Optionally, the LP-WUS is used for at least one of the following:
enabling or waking up a terminal master communication module;
indicating whether to monitor DRX ON;
indicating whether to monitor the PDCCH in a DRX cycle; and
indicating whether to perform PDCCH monitoring.

Optionally, the indicating whether to monitor DRX ON includes at least one of the following:
indicating whether to monitor next DRX ON; and
indicating whether to monitor DRX ON associated with the LP-WUS.

Optionally, the indicating whether to monitor the PDCCH in a DRX cycle includes at least one of the following:
indicating whether to monitor a PDCCH monitoring occasion associated with the LP-WUS;
indicating whether to monitor the PDCCH during an active period of the DRX cycle;
indicating to start PDCCH monitoring in a DRX cycle associated with the LP-WUS;
indicating to end PDCCH monitoring in the DRX cycle associated with the LP-WUS; and
indicating to stop a DRX-on duration timer running in the DRX cycle associated with the LP-WUS.

Optionally, the indicating whether to perform PDCCH monitoring includes at least one of the following:
indicating to start PDCCH monitoring; and
indicating to end PDCCH monitoring.

Optionally, the LP-WUS is further used for at least one of the following:
indicating cell information for wake-up or monitoring;
indicating search space set information for performing PDCCH monitoring; and
indicating whether to perform search space set group SSSG switching.

Optionally, the indicating cell information for wake-up or monitoring includes at least one of the following:
indicating a cell or a cell group associated with the LP-WUS;
a cell indicating whether to perform monitoring;
a cell group indicating wake-up or monitoring; and
indicating whether to wake up or monitor a secondary cell group SCG.

Optionally, before the network side device receives the LP-WUS assistance information sent by the terminal, the method further includes:

The network side device sends LP-WUS assistance configuration information to the terminal.

Optionally, the LP-WUS assistance configuration information is used to indicate at least one of the following:
whether the LP-WUS assistance information is allowed to be reported;
a network side supports the LP-WUS;
the network side supports the LP-WUS assistance information;
information content indicated by the LP-WUS;
a configuration time interval, where the configuration time interval is used to configure that the terminal does not monitor the PDCCH or does not receive data sent by the network within the configuration time interval;
the expected time interval allowed to be reported;
an allowed sleep mode;
a prohibit timer, where when the prohibit timer runs, sending of the LP-WUS assistance information is prohibited;
a cell in which the terminal performs LP-WUS monitoring;
a cell group in which the terminal performs LP-WUS monitoring;
a cycle mode of the LP-WUS supported by the network side;
a parameter range of the LP-WUS supported by the network side;
whether to carry, by using the LP-WUS, search space set information used for PDCCH monitoring; and
configuration information of the LP-WUS.

Optionally, the LP-WUS assistance configuration information is carried in at least one of the following:
a system message and a radio resource control RRC reconfiguration message.

Optionally, the LP-WUS assistance information is carried in at least one of the following:
UE assistance information and an RRC reconfiguration complete message.

Optionally, before the network side device receives the LP-WUS assistance information sent by the terminal, the method further includes:

The network side device receives capability information of the LP-WUS of the terminal that is sent by the terminal.

It should be noted that this embodiment is used as an implementation of the network side device corresponding to the embodiment shown in FIG. 5. For a specific implementation thereof, references may be made to related descriptions of the embodiment shown in FIG. 5. To avoid repetition, details are not described in this embodiment.

The following uses a plurality of embodiments to illustrate the method provided in embodiments of this application.

### Embodiment 1:

When a DRX operation is configured in this embodiment, an LP-WUS indicates a terminal whether to monitor next DRX ON. Details are as follows:

The terminal is configured with a DRX mode operation in an RRC connected state (RRC_CONNECTED).

The terminal receives a configuration message sent by a network, such as an RRC reconfiguration message, where the RRC reconfiguration message includes LP-WUS assistance configuration information. The LP-WUS assistance configuration information includes at least one of the following (for details, refer to the foregoing embodiments, and only some examples are listed herein):
an expected time interval allowed to be reported, such as a time range: {5 ms, 10 ms, 20 ms};
an allowed terminal sleep mode, such as slight sleep (slight Sleep), deep sleep (Deep Sleep), and ultra-deep sleep (Ultra-deep sleep), where the sleep mode implicitly indicates an expected time interval required by the terminal;
a prohibit timer, that is, a time interval at which the terminal sends the LP-WUS assistance information, for example, 2 seconds or 10 seconds; and
a configuration time interval, for example, the terminal is not required to monitor a PDCCH within a configuration time interval before first time.

The LP-WUS indicates the terminal whether to monitor next DRX ON, and the next DRX ON is DRX on duration or a PDCCH monitoring occasion associated with the LP-WUS.

The LP-WUS may be associated with a DRX long cycle or a DRX short cycle.

Optionally, the terminal monitors the LP-WUS.

The terminal sends the LP-WUS assistance information to the network, and the LP-WUS assistance information includes at least one of the following (for details, refer to the foregoing embodiments, and only some examples are listed herein):
an expected time interval, that is, duration required from receiving the LP-WUS wakeup signal to the terminal being able to perform data receiving or PDCCP monitoring, may also be represented as preparation time (preparation time), wake-up duration (wake up time), or a wakeup latency (Wakeup latency);
a DL BWP associated with the expected time interval, such as an active downlink BWP (active DL BWP);
the terminal is not required to monitor the PDCCH in the expected time interval before the first time, for example, the first time is DRX on duration time, that is, the terminal enables DRX-on duration timer at the first time; and
a sleep mode preference.

### Embodiment 2:

In this embodiment, an LP-WUS indicates whether a terminal monitors a PDCCH during a DRX period or an active period, which is specifically as follows:
The terminal is configured with a DRX mode operation in an RRC connected state (RRC_CONNECTED) (configured with DRX mode operation).

The terminal receives a configuration message sent by a network, such as an RRC reconfiguration message, where the RRC reconfiguration message includes LP-WUS assistance configuration information. The LP-WUS assistance configuration information includes at least one of the following (for details, refer to the foregoing embodiments, and only some examples are listed herein):
an expected time interval allowed to be reported, such as a time range: {5 ms, 10 ms, 20 ms}; and
a configuration time interval, that is, minimum time in which the terminal does not need to monitor the PDCCH after receiving the LP-WUS.

Optionally, the terminal monitors the LP-WUS.

That the LP-WUS indicates whether the terminal monitors a PDCCH during a DRX period or an active period includes at least one of the following:
whether to monitor the PDCCH during the active period; and
starting PDCCH monitoring within associated DRX. That is, continuous PDCCH monitoring starts within the DRX.

PDCCH monitoring is stopped within the associated DRX. That is, monitoring of the PDCCH is stopped within the DRX.

The terminal sends the LP-WUS assistance information to the network, and the LP-WUS assistance information includes at least one of the following (for details, refer to the foregoing embodiments, and only some examples are listed herein):
minimum time required from receiving the LP-WUS to the terminal starting to monitor the PDCCH in associated DRX.

### Embodiment 3:

In this embodiment, an LP-WUS indicates a terminal whether to monitor a PDCCH, which is specifically as follows:

The terminal is in an RRC connected state (RRC_CONNECTED).

The terminal receives a configuration message such as an RRC reconfiguration message sent by a network, where the configuration message includes LP-WUS assistance configuration information. The LP-WUS assistance configuration information includes at least one of the following (for details, refer to the foregoing embodiments, and only some examples are listed herein):
an expected time interval allowed to be reported, such as a time range: {5 ms, 10 ms, 20 ms};
an allowed terminal sleep mode, such as slight sleep (slight Sleep), deep sleep (Deep Sleep), and ultra-deep sleep (Ultra-deep sleep); and
minimum time required from receiving an LP-WUS to a corresponding PDCCH monitoring occasion.

Optionally, the terminal monitors the LP-WUS, where the LP-WUS signal is used to indicate the terminal to enable or wake up a master communication module, and is used to indicate at least one of the following:
whether to perform PDCCH monitoring;
indicating the terminal whether to monitor a PDCCH monitoring occasion associated with the LP-WUS;
starting PDCCH monitoring, that is, the network indicates the terminal to start to continuously monitor the PDCCH; and
stopping PDCCH monitoring, that is, the network indicates the terminal to stop monitoring the PDCCH.

The terminal sends the LP-WUS assistance information to the network, and the LP-WUS assistance information includes at least one of the following (for details, refer to the foregoing embodiments, and only some examples are listed herein):
minimum time required from receiving the LP-WUS to the terminal starting a corresponding PDCCH monitoring occasion;
whether continuous LP_WUS monitoring is supported; and
monitoring a cycle mode TDM pattern of the LP-WUS, such as a discontinuous reception DRX cycle, a time offset, and duration used for monitoring the LP-WUS.

### Embodiment 4:

In the foregoing embodiments of this embodiment, there are mainly a plurality of types of interaction signaling:

### Method 1:

A terminal receives an RRC reconfiguration message, where the RRC reconfiguration message includes LP-WUS assistance configuration information, such as an LP-WUS configuration.

The terminal sends an RRC reconfiguration complete message, where the RRC reconfiguration complete message includes LP-WUS assistance information, such as an expected time interval.

### Method 2:

A terminal receives an RRC reconfiguration message, where the RRC reconfiguration message includes LP-WUS assistance configuration information, such as an LP-WUS configuration. The terminal sends an RRC reconfiguration complete message.

The terminal carries LP-WUS assistance information by using a UE assistance information message.

Optionally, the terminal sends the LP-WUS assistance information to a network under at least one of the following conditions:

The terminal is configured to provide the LP-WUS assistance information;
the terminal does not send the LP-WUS assistance information after being configured to provide the LP-WUS assistance information; and

LP-WUS assistance information currently to be sent is different from LP-WUS assistance information sent last time, and a prohibit timer is not running.

The embodiments of this application provide corresponding assistance information reporting methods under a plurality of LP-WUS configurations, so that a terminal and a network side device need to have a consistent understanding of wake-up duration, so as to avoid missing data receiving by the terminal during a wake-up period from sleep. In addition, in a case that the terminal reports LP-WUS indication content preference information, this helps save power of the terminal.

The assistance information sending method provided in the embodiments of this application may be performed by an assistance information sending apparatus. In the embodiments of this application, the assistance information sending apparatus provided in the embodiments of this application is described by using an example in which the assistance information sending apparatus performs the transmission information determining method.

Referring to FIG. 7, FIG. 7 is a structural diagram of an assistance information sending apparatus according to an embodiment of this application. As shown in FIG. 7, an assistance information sending apparatus 700 includes:
a first sending module 701, configured to send low power wake-up signal LP-WUS assistance information, where the LP-WUS assistance information is used to assist in at least one of the following:
sending an LP-WUS to a terminal;
scheduling the terminal;
sending a control command to the terminal; and
sending data to the terminal;
where the LP-WUS assistance information includes at least one of the following:
   an expected time interval and preference information;
   where the terminal does not monitor a physical downlink control channel PDCCH or does not receive data sent by a network within the expected time interval; and
   the preference information includes at least one of the following: sleep mode preference information and LP-WUS indication content preference information. Optionally, the expected time interval includes at least one of the following:
      time required from receiving the LP-WUS to the terminal being able to perform data receiving;
      time required from receiving the LP-WUS to the terminal being able to perform PDCCH monitoring;
      time in which the PDCCH is not monitored before discontinuous reception on DRX ON;
      time required from receiving the LP-WUS to monitoring the PDCCH in a discontinuous reception DRX cycle; and
      a time interval between the LP-WUS and a PDCCH monitoring occasion.

Optionally, the LP-WUS indication content preference information is used to indicate that the terminal prefers at least one of the following:
the LP-WUS is used to indicate whether to monitor DRX ON;
the LP-WUS is used to indicate whether to monitor the PDCCH in a DRX cycle; and
the LP-WUS is used to indicate whether to perform PDCCH monitoring.

Optionally, the LP-WUS assistance information further indicates at least one of the following:
a downlink bandwidth part BWP associated with the expected time interval, whether continuous LP-WUS monitoring is supported, a cycle mode of monitoring the LP-WUS, whether LP-WUS monitoring in a cell group is supported, a cell group that supports LP-WUS monitoring, a cell group associated with the LP-WUS, or activation or deactivation of the LP-WUS.

Optionally, the LP-WUS is used for at least one of the following:
enabling or waking up a terminal master communication module;
indicating whether to monitor DRX ON;
indicating whether to monitor the PDCCH in a DRX cycle; and
indicating whether to perform PDCCH monitoring.

Optionally, the indicating whether to monitor DRX ON includes at least one of the following:
indicating whether to monitor next DRX ON; and
indicating whether to monitor DRX ON associated with the LP-WUS.

Optionally, the indicating whether to monitor the PDCCH in a DRX cycle includes at least one of the following:
indicating whether to monitor a PDCCH monitoring occasion associated with the LP-WUS;
indicating whether to monitor the PDCCH during an active period of the DRX cycle;
indicating to start PDCCH monitoring in a DRX cycle associated with the LP-WUS;
indicating to end PDCCH monitoring in the DRX cycle associated with the LP-WUS; and
indicating to stop a DRX inactivity timer running in the DRX cycle associated with the LP-WUS.

Optionally, the indicating whether to perform PDCCH monitoring includes at least one of the following:
indicating whether to monitor a PDCCH monitoring occasion associated with the LP-WUS;
indicating to start PDCCH monitoring; and
indicating to end PDCCH monitoring.

Optionally, the LP-WUS is further used for at least one of the following:
indicating cell information for wake-up or monitoring;
indicating search space set information for performing PDCCH monitoring; and
indicating whether to perform search space set group SSSG switching.

Optionally, the indicating cell information for wake-up or monitoring includes at least one of the following:
indicating a cell or a cell group associated with the LP-WUS;
a cell indicating whether to perform monitoring;
a cell group indicating wake-up or monitoring; and
indicating whether to wake up or monitor a secondary cell group SCG.

Optionally, the apparatus further includes:
a receiving module, configured to receive LP-WUS assistance configuration information.

Optionally, the LP-WUS assistance configuration information is used to indicate at least one of the following:
whether the LP-WUS assistance information is allowed to be reported;
a network side supports the LP-WUS;
the network side supports the LP-WUS assistance information;
information content indicated by the LP-WUS;
a configuration time interval, where the configuration time interval is used to configure that the terminal does not monitor the PDCCH or does not receive data sent by the network within the configuration time interval;
the expected time interval allowed to be reported;
an allowed sleep mode;
a prohibit timer, where when the prohibit timer runs, the terminal is prohibited from sending the LP-WUS assistance information;
a cell in which the terminal performs LP-WUS monitoring;
a cell group in which the terminal performs LP-WUS monitoring;
a cycle mode of the LP-WUS supported by the network side;
a parameter range of the LP-WUS supported by the network side;
whether to carry, by using the LP-WUS, search space set information used for PDCCH monitoring; and
configuration information of the LP-WUS.

Optionally, the LP-WUS assistance configuration information is carried in at least one of the following:
a system message and a radio resource control RRC reconfiguration message.

Optionally, the LP-WUS assistance information is carried in at least one of the following:
UE assistance information and an RRC reconfiguration complete message.

Optionally, the apparatus further includes:
a second sending module, configured to send capability information of the LP-WUS of the terminal.

The assistance information sending apparatus may improve communication performance of the terminal.

The assistance information sending apparatus in the embodiments of this application may be an electronic device, for example, an electronic device with an operating system, or may be a component such as an integrated circuit or a chip in an electronic device. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The assistance information sending apparatus provided in the embodiments of this application can implement processes implemented in the method embodiment in FIG. 5, and achieve same technical effects. To avoid repetition, details are not described herein again.

The configuration information sending method provided in the embodiments of this application may be performed by a configuration information sending apparatus. In the embodiments of this application, the configuration information sending apparatus provided in the embodiments of this application is described by using an example in which the configuration information sending apparatus performs the configuration information sending method.

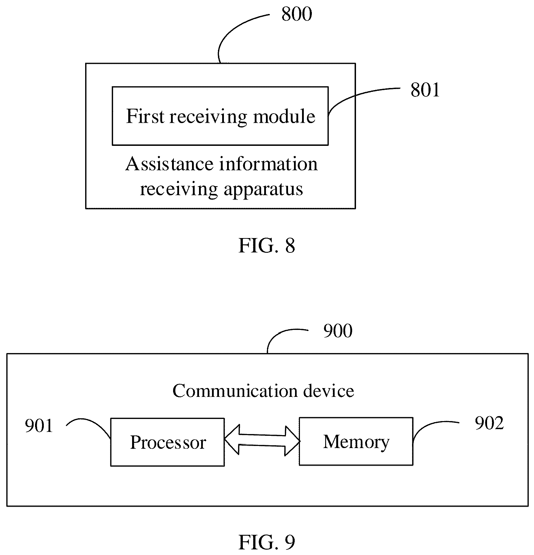

Referring to FIG. 8, FIG. 8 is a structural diagram of an assistance information receiving apparatus according to an embodiment of this application. As shown in FIG. 8, an assistance information receiving apparatus 800 includes:
a first receiving module 801, configured to receive low power wake-up signal LP-WUS assistance information sent by a terminal, where the LP-WUS assistance information is used to assist in at least one of the following:
sending an LP-WUS to the terminal;
scheduling the terminal;
sending a control command to the terminal; and
sending data to the terminal;
where the LP-WUS assistance information includes at least one of the following:
   an expected time interval and preference information;
   where the terminal does not monitor a physical downlink control channel PDCCH or does not receive data sent by a network within the expected time interval; and
   the preference information includes at least one of the following: sleep mode preference information and LP-WUS indication content preference information.

Optionally, the expected time interval includes at least one of the following:
time required from the terminal receiving the LP-WUS to the terminal being able to perform data receiving;
time required from the terminal receiving the LP-WUS to the terminal being able to perform PDCCH monitoring;
time in which the PDCCH is not monitored before discontinuous reception on DRX ON;
time required from the LP-WUS to monitoring the PDCCH in a discontinuous reception DRX cycle; and
a time interval between the LP-WUS and a PDCCH monitoring occasion.

Optionally, the LP-WUS indication content preference information is used to indicate preferring at least one of the following:
the LP-WUS is used to indicate whether to monitor DRX ON;
the LP-WUS is used to indicate whether to monitor the PDCCH in a DRX cycle; and
the LP-WUS is used to indicate whether to perform PDCCH monitoring.

Optionally, the LP-WUS assistance information further indicates at least one of the following:
a downlink bandwidth part BWP associated with the expected time interval, a downlink BWP associated with the first preparation time, whether continuous LP-WUS monitoring is supported, a cycle mode of monitoring the LP-WUS, whether LP-WUS monitoring in a cell group is supported, a cell group that supports LP-WUS monitoring, a cell group associated with the LP-WUS, or activation or deactivation of the LP-WUS.

Optionally, the LP-WUS is used for at least one of the following:
enabling or waking up a terminal master communication module;
indicating whether to monitor DRX ON;
indicating whether to monitor the PDCCH in a DRX cycle; and
indicating whether to perform PDCCH monitoring.

Optionally, the indicating whether to monitor DRX ON includes at least one of the following:
indicating whether to monitor next DRX ON; and
indicating whether to monitor DRX ON associated with the LP-WUS.

Optionally, the indicating whether to monitor the PDCCH in a DRX cycle includes at least one of the following:
indicating whether to monitor a PDCCH monitoring occasion associated with the LP-WUS;
indicating whether to monitor the PDCCH during an active period of the DRX cycle;
indicating to start PDCCH monitoring in a DRX cycle associated with the LP-WUS;
indicating to end PDCCH monitoring in the DRX cycle associated with the LP-WUS; and
indicating to stop a DRX inactivity timer running in the DRX cycle associated with the LP-WUS.

Optionally, the indicating whether to perform PDCCH monitoring includes at least one of the following:
indicating whether to monitor a PDCCH monitoring occasion associated with the LP-WUS;
indicating to start PDCCH monitoring; and
indicating to end PDCCH monitoring.

Optionally, the LP-WUS is further used for at least one of the following:
indicating cell information for wake-up or monitoring;
indicating search space set information for performing PDCCH monitoring; and
indicating whether to perform search space set group SSSG switching.

Optionally, the indicating cell information for wake-up or monitoring includes at least one of the following:
indicating a cell or a cell group associated with the LP-WUS;
a cell indicating whether to perform monitoring;
a cell group indicating wake-up or monitoring; and
indicating whether to wake up or monitor a secondary cell group SCG.

Optionally, the apparatus further includes:
a sending module, configured to send LP-WUS assistance configuration information to the terminal.

Optionally, the LP-WUS assistance configuration information is used to indicate at least one of the following:
whether the LP-WUS assistance information is allowed to be reported;
a network side supports the LP-WUS;
the network side supports the LP-WUS assistance information;
information content indicated by the LP-WUS;
a configuration time interval, where the configuration time interval is used to configure that the terminal does not monitor the PDCCH or does not receive data sent by the network within the configuration time interval;
the expected time interval allowed to be reported;
an allowed sleep mode;
a prohibit timer, where when the prohibit timer runs, sending of the LP-WUS assistance information is prohibited;
a cell in which the terminal performs LP-WUS monitoring;
a cell group in which the terminal performs LP-WUS monitoring;
a cycle mode of the LP-WUS supported by the network side;
a parameter range of the LP-WUS supported by the network side;
whether to carry, by using the LP-WUS, search space set information used for PDCCH monitoring; and
configuration information of the LP-WUS.

Optionally, the LP-WUS assistance configuration information is carried in at least one of the following:
a system message and a radio resource control RRC reconfiguration message.

Optionally, the LP-WUS assistance information is carried in at least one of the following:
UE assistance information and an RRC reconfiguration complete message.

Optionally, the apparatus further includes:
a second receiving module, configured to receive capability information of the LP-WUS of the terminal that is sent by the terminal.

The assistance information receiving apparatus may improve communication performance of the terminal.

The assistance information receiving apparatus in the embodiments of this application may be an electronic device, for example, an electronic device with an operating system, or may be a component such as an integrated circuit or a chip in an electronic device. The electronic device may be a terminal or a network side device.

The assistance information receiving apparatus provided in the embodiments of this application can implement processes implemented in the method embodiment in FIG. 6, and achieve same technical effects. To avoid repetition, details are not described herein again.

As shown in FIG. 9, an embodiment of this application further provides a communication device 900, including a processor 901 and a memory 902. A program or instructions that can be run on the processor 901 are stored in the memory 902. For example, when the communication device 900 is a terminal, and the program or the instructions are executed by the processor 901, each step of the assistance information sending method embodiment is implemented, and a same technical effect can be achieved. When the communication device 900 is a network side device, each step of the assistance information receiving method embodiment is implemented when the program or the instructions are executed by the processor 901, and a same technical effect can be achieved. To avoid repetition, details are not described herein again.

An embodiment of this application further provides a terminal, including a processor and a communication interface, where the communication interface is configured to send low power wake-up signal LP-WUS assistance information, and the LP-WUS assistance information is used to assist in at least one of the following: sending an LP-WUS to the terminal; scheduling the terminal; sending a control command to the terminal; and sending data to the terminal.

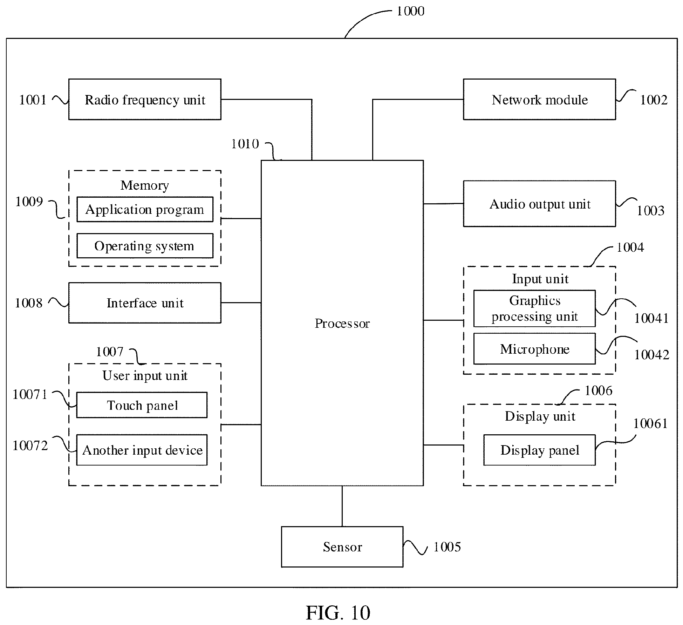

An embodiment of this application further provides a terminal, including a processor and a communication interface. The communication interface is coupled to the processor. The processor is configured to run a program or instructions to implement the steps in the method embodiment shown in FIG. 5. The terminal embodiment corresponds to the foregoing terminal-side method embodiment. Each implementation process and implementation of the foregoing method embodiment may be applied to the terminal embodiment, and the same technical effects can be achieved. Specifically, FIG. 10 is a schematic diagram of a hardware structure of a terminal according to an embodiment of this application.

The terminal 1000 includes but is not limited to at least some components of a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

A person skilled in the art may understand that the terminal 1000 may further include a power supply (for example, a battery) that supplies power to each component. The power supply may be logically connected to the processor 1010 by using a power management system, to implement functions such as charging management, discharging management, and power consumption management through the power management system. The terminal structure shown in FIG. 10 constitutes no limitation on the terminal, and the terminal may include more or fewer components than those shown in the figure, or combine some components, or have different component arrangements.

It should be understood that in this embodiment of this application, the input unit 1004 may include a graphics processing unit (Graphics Processing Unit, GPU) 10041 and a microphone 10042, and the graphics processing unit 10041 processes image data of a still picture or a video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a function key (such as a volume control key or an on/off key), a trackball, a mouse, and an operating lever. Details are not described herein again.

In this embodiment of this application, after receiving downlink data from a network side device, the radio frequency unit 1001 can transmit the downlink data to the processor 1010 for processing. In addition, the radio frequency unit 1001 can send uplink data to the network side device. Generally, the radio frequency unit 1001 includes but is not limited to an antenna, an amplifier, a transceiver, a coupler, a low-noise amplifier, a duplexer, and the like.

The memory 1009 may be configured to store a software program or instructions and various types of data. The memory 1009 can mainly include a first storage area for storing a program or instructions and a second storage area for storing data. The first storage area can store an operating system, an application program or instructions required by at least one function (for example, a sound play function or an image play function), and the like. In addition, the memory 1009 may include a volatile memory or a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1009 in this embodiment of this application includes but is not limited to these memories and any other suitable type of memory.

The processor 1010 may include one or more processing units. Optionally, the processor 1010 integrates an application processor and a modem processor. The application processor mainly processes operations related to an operating system, a user interface, an application program, and the like. The modem processor, for example, a baseband processor, mainly processes a wireless communication signal. It can be understood that, the foregoing modem processor may not be integrated into the processor 1010.

The radio frequency unit 1001 is configured to: send, by the terminal, low power wakeup signal LP-WUS assistance information, where the LP-WUS assistance information is used to assist in at least one of the following:
sending an LP-WUS to the terminal;
scheduling the terminal;
sending a control command to the terminal; and
sending data to the terminal;
where the LP-WUS assistance information includes at least one of the following:
   an expected time interval and preference information;
   where the terminal does not monitor a physical downlink control channel PDCCH or does not receive data sent by a network within the expected time interval; and
   the preference information includes at least one of the following: sleep mode preference information and LP-WUS indication content preference information.

Optionally, the expected time interval includes at least one of the following:
time required from receiving the LP-WUS to the terminal being able to perform data receiving;
time required from receiving the LP-WUS to the terminal being able to perform PDCCH monitoring;
time in which the PDCCH is not monitored before discontinuous reception on DRX ON;
time required from receiving the LP-WUS to monitoring the PDCCH in a discontinuous reception DRX cycle; and
a time interval between the LP-WUS and a PDCCH monitoring occasion.

Optionally, the LP-WUS indication content preference information is used to indicate that the terminal prefers at least one of the following:
the LP-WUS is used to indicate whether to monitor DRX ON;
the LP-WUS is used to indicate whether to monitor the PDCCH in a DRX cycle; and
the LP-WUS is used to indicate whether to perform PDCCH monitoring.

Optionally, the LP-WUS assistance information further indicates at least one of the following:
a downlink bandwidth part BWP associated with the expected time interval, whether continuous LP-WUS monitoring is supported, a cycle mode of monitoring the LP-WUS, whether LP-WUS monitoring in a cell group is supported, a cell group that supports LP-WUS monitoring, a cell group associated with the LP-WUS, or activation or deactivation of the LP-WUS.

Optionally, the LP-WUS is used for at least one of the following:
enabling or waking up a terminal master communication module;
indicating whether to monitor DRX ON;
indicating whether to monitor the PDCCH in a DRX cycle; and
indicating whether to perform PDCCH monitoring.

Optionally, the indicating whether to monitor DRX ON includes at least one of the following:
indicating whether to monitor next DRX ON; and
indicating whether to monitor DRX ON associated with the LP-WUS.

Optionally, the indicating whether to monitor the PDCCH in a DRX cycle includes at least one of the following:
indicating whether to monitor a PDCCH monitoring occasion associated with the LP-WUS;
indicating whether to monitor the PDCCH during an active period of the DRX cycle;
indicating to start PDCCH monitoring in a DRX cycle associated with the LP-WUS;
indicating to end PDCCH monitoring in the DRX cycle associated with the LP-WUS; and
indicating to stop a DRX inactivity timer running in the DRX cycle associated with the LP-WUS.

Optionally, the indicating whether to perform PDCCH monitoring includes at least one of the following:
indicating whether to monitor a PDCCH monitoring occasion associated with the LP-WUS;
indicating to start PDCCH monitoring; and
indicating to end PDCCH monitoring.

Optionally, the LP-WUS is further used for at least one of the following:
indicating cell information for wake-up or monitoring;
indicating search space set information for performing PDCCH monitoring; and
indicating whether to perform search space set group SSSG switching.

Optionally, the indicating cell information for wake-up or monitoring includes at least one of the following:
indicating a cell or a cell group associated with the LP-WUS;
a cell indicating whether to perform monitoring;
a cell group indicating wake-up or monitoring; and
indicating whether to wake up or monitor a secondary cell group SCG.

Optionally, before the terminal sends the LP-WUS assistance information, the radio frequency unit 1001 is further configured to:
receive LP-WUS assistance configuration information.

Optionally, the LP-WUS assistance configuration information is used to indicate at least one of the following:
whether the LP-WUS assistance information is allowed to be reported;
a network side supports the LP-WUS;
the network side supports the LP-WUS assistance information;
information content indicated by the LP-WUS;
a configuration time interval, where the configuration time interval is used to configure that the terminal does not monitor the PDCCH or does not receive data sent by the network within the configuration time interval;
the expected time interval allowed to be reported;
an allowed sleep mode;
a prohibit timer, where when the prohibit timer runs, the terminal is prohibited from sending the LP-WUS assistance information;
a cell in which the terminal performs LP-WUS monitoring;
a cell group in which the terminal performs LP-WUS monitoring;
a cycle mode of the LP-WUS supported by the network side;
a parameter range of the LP-WUS supported by the network side;
whether to carry, by using the LP-WUS, search space set information used for PDCCH monitoring; and
configuration information of the LP-WUS.

Optionally, the LP-WUS assistance configuration information is carried in at least one of the following:
a system message and a radio resource control RRC reconfiguration message.

Optionally, the LP-WUS assistance information is carried in at least one of the following:
UE assistance information and an RRC reconfiguration complete message.

Optionally, before the terminal sends the LP-WUS assistance information, the radio frequency unit 1001 is further configured to:
send capability information of the LP-WUS of the terminal.

The terminal may improve communication performance of the terminal.

It may be understood that for implementation processes of the implementations mentioned in this embodiment, reference may be made to related descriptions in the method embodiment, and same or corresponding technical effects are achieved. To avoid repetition, details are not described herein again.

An embodiment of this application further provides a network side device, including a processor and a communication interface, where the communication interface is configured to receive low power wake-up signal LP-WUS assistance information sent by a terminal, and the LP-WUS assistance information is used to assist in at least one of the following: sending an LP-WUS to the terminal; scheduling the terminal; sending a control command to the terminal; and sending data to the terminal.

An embodiment of this application further provides a network side device, including a processor and a communication interface. The communication interface is coupled to the processor. The processor is configured to run a program or instructions to implement the steps in the method embodiment shown in FIG. 6. The wireless access network device embodiment corresponds to the foregoing method embodiment for the network side device. Each implementation process and implementation of the foregoing method embodiment may be applied to the network side device embodiment, and the same technical effects can be achieved.

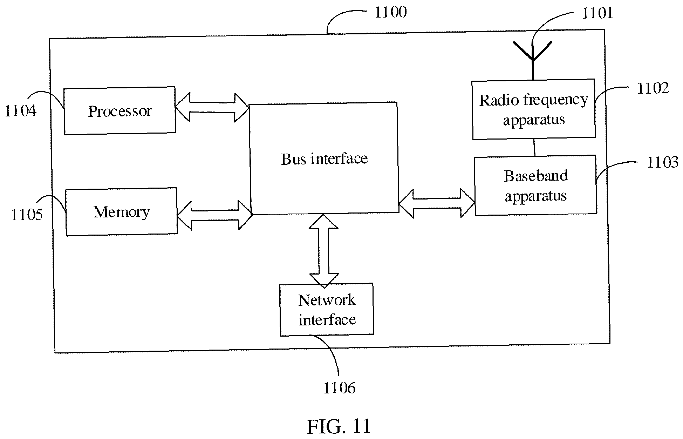

Specifically, an embodiment of this application further provides a network side device. As shown in FIG. 11, the network side device 1100 includes an antenna 1101, a radio frequency apparatus 1102, a baseband apparatus 1103, a processor 1104, and a memory 1105. The antenna 1101 is connected to the radio frequency apparatus 1102. In an uplink direction, the radio frequency apparatus 1102 receives information through the antenna 1101, and sends the received information to the baseband apparatus 1103 for processing. In a downlink direction, the baseband apparatus 1103 processes to-be-sent information, and sends processed information to the radio frequency apparatus 1102. After processing the received information, the radio frequency apparatus 1102 sends processed information through the antenna 1101.

The method performed by the network side device in the foregoing embodiment may be implemented in the baseband apparatus 1103. The baseband apparatus 1103 includes a baseband processor.

For example, the baseband apparatus 1103 may include at least one baseband board. A plurality of chips are disposed on the baseband board. As shown in FIG. 11, one of the chips is, for example, the baseband processor, and is connected to the memory 1105 by using a bus interface, to invoke a program in the memory 1105 to perform an operation of a network device shown in the foregoing method embodiment.

The network side device may further include a network interface 1106, and the interface is, for example, a common public radio interface (Common Public Radio Interface, CPRI).

Specifically, the network side device 1100 in this embodiment of this application further includes instructions or a program stored in the memory 1105 and capable of running on the processor 1104. The processor 1104 invokes the instructions or the program in the memory 1105 to perform the method performed by the modules shown in FIG. 8, and the same technical effects are achieved. To avoid repetition, details are not described herein again.

The radio frequency apparatus 1102 is configured to receive low power wake-up signal LP-WUS assistance information sent by a terminal, where the LP-WUS assistance information is used to assist in at least one of the following:
sending an LP-WUS to the terminal;
scheduling the terminal;
sending a control command to the terminal; and
sending data to the terminal;
where the LP-WUS assistance information includes at least one of the following:
   an expected time interval and preference information;
   where the terminal does not monitor a physical downlink control channel PDCCH or does not receive data sent by a network within the expected time interval; and
   the preference information includes at least one of the following: sleep mode preference information and LP-WUS indication content preference information.

Optionally, the expected time interval includes at least one of the following:
time required from the terminal receiving the LP-WUS to the terminal being able to perform data receiving;
time required from the terminal receiving the LP-WUS to the terminal being able to perform PDCCH monitoring;
time in which the PDCCH is not monitored before discontinuous reception on DRX ON;
time required from the LP-WUS to monitoring the PDCCH in a discontinuous reception DRX cycle; and
a time interval between the LP-WUS and a PDCCH monitoring occasion.

Optionally, the LP-WUS indication content preference information is used to indicate preferring at least one of the following:
the LP-WUS is used to indicate whether to monitor DRX ON;
the LP-WUS is used to indicate whether to monitor the PDCCH in a DRX cycle; and
the LP-WUS is used to indicate whether to perform PDCCH monitoring.

Optionally, the LP-WUS assistance information further indicates at least one of the following:
a downlink bandwidth part BWP associated with the expected time interval, a downlink BWP associated with the first preparation time, whether continuous LP-WUS monitoring is supported, a cycle mode of monitoring the LP-WUS, whether LP-WUS monitoring in a cell group is supported, a cell group that supports LP-WUS monitoring, a cell group associated with the LP-WUS, or activation or deactivation of the LP-WUS.

Optionally, the LP-WUS is used for at least one of the following:
enabling or waking up a terminal master communication module;
indicating whether to monitor DRX ON;
indicating whether to monitor the PDCCH in a DRX cycle; and
indicating whether to perform PDCCH monitoring.

Optionally, the indicating whether to monitor DRX ON includes at least one of the following:
indicating whether to monitor next DRX ON; and
indicating whether to monitor DRX ON associated with the LP-WUS.

Optionally, the indicating whether to monitor the PDCCH in a DRX cycle includes at least one of the following:
indicating whether to monitor a PDCCH monitoring occasion associated with the LP-WUS;
indicating whether to monitor the PDCCH during an active period of the DRX cycle;
indicating to start PDCCH monitoring in a DRX cycle associated with the LP-WUS;
indicating to end PDCCH monitoring in the DRX cycle associated with the LP-WUS; and
indicating to stop a DRX inactivity timer running in the DRX cycle associated with the LP-WUS.

Optionally, the indicating whether to perform PDCCH monitoring includes at least one of the following:
indicating whether to monitor a PDCCH monitoring occasion associated with the LP-WUS;
indicating to start PDCCH monitoring; and
indicating to end PDCCH monitoring.

Optionally, the LP-WUS is further used for at least one of the following:
indicating cell information for wake-up or monitoring;
indicating search space set information for performing PDCCH monitoring; and
indicating whether to perform search space set group SSSG switching.

Optionally, the indicating cell information for wake-up or monitoring includes at least one of the following:
indicating a cell or a cell group associated with the LP-WUS;
a cell indicating whether to perform monitoring;
a cell group indicating wake-up or monitoring; and
indicating whether to wake up or monitor a secondary cell group SCG.

Optionally, before the network side device receives the LP-WUS assistance information sent by the terminal, the radio frequency apparatus 1102 is further configured to:
send LP-WUS assistance configuration information to the terminal.

Optionally, the LP-WUS assistance configuration information is used to indicate at least one of the following:
whether the LP-WUS assistance information is allowed to be reported;
a network side supports the LP-WUS;
the network side supports the LP-WUS assistance information;
information content indicated by the LP-WUS;
a configuration time interval, where the configuration time interval is used to configure that the terminal does not monitor the PDCCH or does not receive data sent by the network within the configuration time interval;
the expected time interval allowed to be reported;
an allowed sleep mode;
a prohibit timer, where when the prohibit timer runs, sending of the LP-WUS assistance information is prohibited;
a cell in which the terminal performs LP-WUS monitoring;
a cell group in which the terminal performs LP-WUS monitoring;
a cycle mode of the LP-WUS supported by the network side;
a parameter range of the LP-WUS supported by the network side;
whether to carry, by using the LP-WUS, search space set information used for PDCCH monitoring; and
configuration information of the LP-WUS.

Optionally, the LP-WUS assistance configuration information is carried in at least one of the following:
a system message and a radio resource control RRC reconfiguration message.

Optionally, the LP-WUS assistance information is carried in at least one of the following:
UE assistance information and an RRC reconfiguration complete message.

Optionally, before the network side device receives the LP-WUS assistance information sent by the terminal, the radio frequency apparatus 1102 is further configured to:
receive capability information of the LP-WUS of the terminal that is sent by the terminal.

The network side device may improve communication performance of the terminal.

An embodiment of this application further provides a readable storage medium. The readable storage medium stores a program or instructions. When the program or the instructions are executed by a processor, various processes in the foregoing assistance information sending method or assistance information receiving method embodiments are implemented, and a same technical effect can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement various processes in the foregoing assistance information sending method or assistance information receiving method embodiments, and a same technical effect can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement various processes in the foregoing assistance information sending method or assistance information receiving method embodiments, and a same technical effect can be achieved. To avoid repetition, details are not described herein again.

An embodiment of this application further provides a wireless communication system, including a terminal and a network side device, where the terminal may be configured to perform the steps of the assistance information sending method provided in the embodiments of this application, and the network side device may be configured to perform the steps of the assistance information receiving method provided in the embodiments of this application.

It should be noted that in this specification, the term "include", "comprise", or any of their variants is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more constraints, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. An assistance information sending method, comprising:
sending, by a terminal, low power wake-up signal LP-WUS assistance information, wherein the LP-WUS assistance information is used to assist in at least one of the following:
sending an LP-WUS to the terminal;
scheduling the terminal;
sending a control command to the terminal; and
sending data to the terminal;
wherein the LP-WUS assistance information comprises at least one of the following:
an expected time interval and preference information;
wherein the terminal does not monitor a physical downlink control channel PDCCH or does not receive data sent by a network within the expected time interval; and
the preference information comprises at least one of the following: sleep mode preference information and LP-WUS indication content preference information.

2. The method according to claim 1, wherein the expected time interval comprises at least one of the following:
time required from receiving the LP-WUS to the terminal being able to perform data receiving;
time required from receiving the LP-WUS to the terminal being able to perform PDCCH monitoring;
time in which the PDCCH is not monitored before discontinuous reception on DRX ON;
time required from receiving the LP-WUS to monitoring the PDCCH in a discontinuous reception DRX cycle; and
a time interval between the LP-WUS and a PDCCH monitoring occasion.

3. The method according to claim 1 or 2, wherein the LP-WUS indication content preference information is used to indicate that the terminal prefers at least one of the following:
the LP-WUS is used to indicate whether to monitor DRX ON;
the LP-WUS is used to indicate whether to monitor the PDCCH in a DRX cycle; and
the LP-WUS is used to indicate whether to perform PDCCH monitoring.

4. The method according to any one of claims 1 to 3, wherein the LP-WUS assistance information further indicates at least one of the following:
a downlink bandwidth part BWP associated with the expected time interval, whether continuous LP-WUS monitoring is supported, a cycle mode of monitoring the LP-WUS, whether LP-WUS monitoring in a cell group is supported, a cell group that supports LP-WUS monitoring, a cell group associated with the LP-WUS, or activation or deactivation of the LP-WUS.

5. The method according to any one of claims 1 to 4, wherein the LP-WUS is used for at least one of the following:
enabling or waking up a terminal master communication module;
indicating whether to monitor DRX ON;
indicating whether to monitor the PDCCH in a DRX cycle; and
indicating whether to perform PDCCH monitoring.

6. The method according to claim 5, wherein the indicating whether to monitor DRX ON comprises at least one of the following:
indicating whether to monitor next DRX ON; and
indicating whether to monitor DRX ON associated with the LP-WUS.

7. The method according to claim 5, wherein the indicating whether to monitor the PDCCH in a DRX cycle comprises at least one of the following:
indicating whether to monitor a PDCCH monitoring occasion associated with the LP-WUS;
indicating whether to monitor the PDCCH during an active period of the DRX cycle;
indicating to start PDCCH monitoring in a DRX cycle associated with the LP-WUS;
indicating to end PDCCH monitoring in the DRX cycle associated with the LP-WUS; and
indicating to stop a DRX inactivity timer running in the DRX cycle associated with the LP-WUS.

8. The method according to claim 5, wherein the indicating whether to perform PDCCH monitoring comprises at least one of the following:
indicating whether to monitor a PDCCH monitoring occasion associated with the LP-WUS;
indicating to start PDCCH monitoring; and
indicating to end PDCCH monitoring.

9. The method according to any one of claims 5 to 8, wherein the LP-WUS is further used for at least one of the following:
indicating cell information for wake-up or monitoring;
indicating search space set information for performing PDCCH monitoring; and
indicating whether to perform search space set group SSSG switching.

10. The method according to claim 9, wherein the indicating cell information for wake-up or monitoring comprises at least one of the following:
indicating a cell or a cell group associated with the LP-WUS;
a cell indicating whether to perform monitoring;
a cell group indicating wake-up or monitoring; and
indicating whether to wake up or monitor a secondary cell group SCG.

11. The method according to any one of claims 1 to 10, wherein before the sending, by a terminal, LP-WUS assistance information, the method further comprises:
receiving, by the terminal, LP-WUS assistance configuration information.

12. The method according to claim 11, wherein the LP-WUS assistance configuration information is used to indicate at least one of the following:
whether the LP-WUS assistance information is allowed to be reported;
a network side supports the LP-WUS;
the network side supports the LP-WUS assistance information;
information content indicated by the LP-WUS;
a configuration time interval, wherein the configuration time interval is used to configure that the terminal does not monitor the PDCCH or does not receive data sent by the network within the configuration time interval;
the expected time interval allowed to be reported;
an allowed sleep mode;
a prohibit timer, wherein when the prohibit timer runs, the terminal is prohibited from sending the LP-WUS assistance information;
a cell in which the terminal performs LP-WUS monitoring;
a cell group in which the terminal performs LP-WUS monitoring;
a cycle mode of the LP-WUS supported by the network side;
a parameter range of the LP-WUS supported by the network side;
whether to carry, by using the LP-WUS, search space set information used for PDCCH monitoring; and
configuration information of the LP-WUS.

13. The method according to claim 11 or 12, wherein the LP-WUS assistance configuration information is carried in at least one of the following:
a system message and a radio resource control RRC reconfiguration message.

14. The method according to any one of claims 1 to 13, wherein the LP-WUS assistance information is carried in at least one of the following:
UE assistance information and an RRC reconfiguration complete message.

15. The method according to any one of claims 1 to 14, wherein before the sending, by a terminal, LP-WUS assistance information, the method further comprises:
sending, by the terminal, capability information of the LP-WUS of the terminal.

16. An assistance information receiving method, comprising:
receiving, by a network side device, low power wake-up signal LP-WUS assistance information sent by a terminal, wherein the LP-WUS assistance information is used to assist in at least one of the following:
sending an LP-WUS to the terminal;
scheduling the terminal;
sending a control command to the terminal; and
sending data to the terminal;
wherein the LP-WUS assistance information comprises at least one of the following:
an expected time interval and preference information;
wherein the terminal does not monitor a physical downlink control channel PDCCH or does not receive data sent by a network within the expected time interval; and
the preference information comprises at least one of the following: sleep mode preference information and LP-WUS indication content preference information.

17. The method according to claim 16, wherein the expected time interval comprises at least one of the following:
time required from the terminal receiving the LP-WUS to the terminal being able to perform data receiving;
time required from the terminal receiving the LP-WUS to the terminal being able to perform PDCCH monitoring;
time in which the PDCCH is not monitored before discontinuous reception on DRX ON;
time required from the LP-WUS to monitoring the PDCCH in a discontinuous reception DRX cycle; and
a time interval between the LP-WUS and a PDCCH monitoring occasion.

18. The method according to claim 16 or 17, wherein the LP-WUS indication content preference information is used to indicate preferring at least one of the following:
the LP-WUS is used to indicate whether to monitor DRX ON;
the LP-WUS is used to indicate whether to monitor the PDCCH in a DRX cycle; and
the LP-WUS is used to indicate whether to perform PDCCH monitoring.

19. The method according to any one of claims 16 to 18, wherein the LP-WUS assistance information further indicates at least one of the following:
a downlink bandwidth part BWP associated with the expected time interval, whether continuous LP-WUS monitoring is supported, a cycle mode of monitoring the LP-WUS, whether LP-WUS monitoring in a cell group is supported, a cell group that supports LP-WUS monitoring, a cell group associated with the LP-WUS, or activation or deactivation of the LP-WUS.

20. The method according to any one of claims 16 to 19, wherein the LP-WUS is used for at least one of the following:
enabling or waking up a terminal master communication module;
indicating whether to monitor DRX ON;
indicating whether to monitor the PDCCH in a DRX cycle; and
indicating whether to perform PDCCH monitoring.

21. The method according to claim 20, wherein the indicating whether to monitor DRX ON comprises at least one of the following:
indicating whether to monitor next DRX ON; and
indicating whether to monitor DRX ON associated with the LP-WUS.

22. The method according to claim 20, wherein the indicating whether to monitor the PDCCH in a DRX cycle comprises at least one of the following:
indicating whether to monitor a PDCCH monitoring occasion associated with the LP-WUS;
indicating whether to monitor the PDCCH during an active period of the DRX cycle;
indicating to start PDCCH monitoring in a DRX cycle associated with the LP-WUS;
indicating to end PDCCH monitoring in the DRX cycle associated with the LP-WUS; and
indicating to stop a DRX inactivity timer running in the DRX cycle associated with the LP-WUS.

23. The method according to claim 20, wherein the indicating whether to monitor the PDCCH comprises at least one of the following:
indicating whether to monitor a PDCCH monitoring occasion associated with the LP-WUS;
indicating to start PDCCH monitoring; and
indicating to end PDCCH monitoring.

24. The method according to any one of claims 20 to 23, wherein the LP-WUS is further used for at least one of the following:
indicating cell information for wake-up or monitoring;
indicating search space set information for performing PDCCH monitoring; and
indicating whether to perform search space set group SSSG switching.

25. The method according to claim 24, wherein the indicating cell information for wake-up or monitoring comprises at least one of the following:
indicating a cell or a cell group associated with the LP-WUS;
a cell indicating whether to perform monitoring;
a cell group indicating wake-up or monitoring; and
indicating whether to wake up or monitor a secondary cell group SCG.

26. The method according to any one of claims 16 to 25, wherein before the receiving, by a network side device, LP-WUS assistance information sent by a terminal, the method further comprises:
sending, by the network side device, LP-WUS assistance configuration information to the terminal.

27. The method according to claim 26, wherein the LP-WUS assistance configuration information is used to indicate at least one of the following:
whether the LP-WUS assistance information is allowed to be reported;
a network side supports the LP-WUS;
the network side supports the LP-WUS assistance information;
information content indicated by the LP-WUS;
a configuration time interval, wherein the configuration time interval is used to configure that the terminal does not monitor the PDCCH or does not receive data sent by the network within the configuration time interval;
the expected time interval allowed to be reported;
an allowed sleep mode;
a prohibit timer, wherein when the prohibit timer runs, sending of the LP-WUS assistance information is prohibited;
a cell in which the terminal performs LP-WUS monitoring;
a cell group in which the terminal performs LP-WUS monitoring;
a cycle mode of the LP-WUS supported by the network side;
a parameter range of the LP-WUS supported by the network side;
whether to carry, by using the LP-WUS, search space set information used for PDCCH monitoring; and
configuration information of the LP-WUS.

28. The method according to claim 26 or 27, wherein the LP-WUS assistance configuration information is carried in at least one of the following:
a system message and a radio resource control RRC reconfiguration message.

29. The method according to any one of claims 16 to 28, wherein the LP-WUS assistance information is carried in at least one of the following:
UE assistance information and an RRC reconfiguration complete message.

30. The method according to any one of claims 16 to 29, wherein before the receiving, by a network side device, LP-WUS assistance information sent by a terminal, the method further comprises:
receiving, by the network side device, capability information of the LP-WUS of the terminal that is sent by the terminal.

31. An assistance information sending apparatus, comprising:
a first sending module, configured to send low power wake-up signal LP-WUS assistance information, wherein the LP-WUS assistance information is used to assist in at least one of the following:
sending an LP-WUS to a terminal;
scheduling the terminal;
sending a control command to the terminal; and
sending data to the terminal;
wherein the LP-WUS assistance information comprises at least one of the following:
an expected time interval and preference information;
wherein the terminal does not monitor a physical downlink control channel PDCCH or does not receive data sent by a network within the expected time interval; and
the preference information comprises at least one of the following: sleep mode preference information and LP-WUS indication content preference information.

32. An assistance information receiving apparatus, comprising:
a first receiving module, configured to receive low power wake-up signal LP-WUS assistance information sent by a terminal, wherein the LP-WUS assistance information is used to assist in at least one of the following:
sending an LP-WUS to the terminal;
scheduling the terminal;
sending a control command to the terminal; and
sending data to the terminal;
wherein the LP-WUS assistance information comprises at least one of the following:
an expected time interval and preference information;
wherein the terminal does not monitor a physical downlink control channel PDCCH or does not receive data sent by a network within the expected time interval; and
the preference information comprises at least one of the following: sleep mode preference information and LP-WUS indication content preference information.

33. A terminal, comprising a processor and a memory, wherein the memory stores a program or instructions capable of running on the processor, and the program or instructions are executed by the processor to implement the steps of the assistance information sending method according to any one of claims 1 to 15.

34. A network side device, comprising a processor and a memory, wherein the memory stores a program or instructions capable of running on the processor, and the program or the instructions are executed by the processor to implement the steps of the assistance information receiving method according to any one of claims 16 to 30.

35. A readable storage medium, wherein the readable storage medium stores a program or instructions, and the program or the instructions are executed by a processor to implement the steps of the assistance information sending method according to any one of claims 1 to 15, or to implement the steps of the assistance information receiving method according to any one of claims 16 to 30.
